# DEMANDE DE BREVET EUROPEEN

(11) **EP 0 702 419 A1**
(43) Date de publication de la demande: **20.03.1996**
(21) Numéro de dépôt: 95402105.1
(22) Date de dépôt: 19.09.1995
(51) Int. Cl.: H01L 41/04, H01L 41/09, H02N 2/14

(54) **Transducteur perfectionné, notamment moteur piezoélectrique**

(30) Priorité: 19.09.1994 FR 9411126
(71) Demandeur: MAGNETI MARELLI FRANCE, F-92000 Nanterre (FR)
(72) Inventeur: Bezard, Jean-Jacques, F-78400 Chatou (FR); Trigui, Fathi, F-75011 Paris (FR)
(74) Mandataire: Texier, Christian

(57) **Abrégé**

La présente invention concerne un transducteur électrique comprenant un élément fixe (20), un élément (40) mobile par rapport à l'élément fixe (20), et des moyens de contrôle (26; 80) à alimentation électrique aptes à contrôler le déplacement relatif entre l'élément fixe (20) et l'élément mobile (40), caractérisé par le fait qu'il comprend des moyens de commande (76) aptes à appliquer aux moyens de contrôle (26), un signal d'alimentation électrique dont la fréquence est proche de la fréquence de résonance du transducteur.

## Description

La présente invention concerne le domaine des transducteurs électriques.

Elle s'applique notamment aux transducteurs à onde mécanique progressive, en particulier, mais non exclusivement, des transducteurs à onde progressive ultrasonore.

La présente invention vise notamment le domaine technique des véhicules automobiles.

Dans le cadre de la présente invention, le terme «transducteur» recouvre à la fois, d'une part tout actionneur ou moteur apte à transformer un signal électrique d'entrée en un déplacement mécanique de sortie, et d'autre part tout capteur apte à transformer un déplacement mécanique d'entrée en un signal électrique de sortie.

Cependant entre ces deux applications, celle concernant les actionneurs ou moteurs doit être considérée comme préférentielle.

Par ailleurs, dans le cadre de la présente invention, on entend par "actionneur" tout dispositif apte à déplacer un organe utile, par exemple une aiguille indicatrice, un système d'essuie-glace, un dispositif de positionnement de phares, etc...

La présente invention s'applique ainsi notamment à la conception d'un actionneur comprenant un moteur générant une vibration ultrasonore de type elliptique.

Par la suite, on s'attachera essentiellement à la description de moteurs conformes à la présente invention, sans que ce descriptif puisse être considéré comme limitatif, dans la mesure où comme évoqué précédemment, l'invention concerne également des structures de capteur.

La présente invention trouve en particulier, mais non exclusivement, application dans la réalisation d'un actionneur apte à déplacer une aiguille indicatrice en regard d'un cadran, dans un tableau de bord de véhicule automobile pour mettre à disposition du conducteur différents paramètres relatifs au véhicule, par exemple la vitesse de celui-ci, la température du moteur, le niveau d'huile, etc ...

Dans le cadre de la présente invention, le transducteur exploitant une vibration mécanique, de préférence ultrasonore, de type elliptique, est formé de préférence d'un moteur piézo-électrique ou d'un moteur magnétostrictif.

On a déjà proposé différents moteurs piézo-électriques.

Ceux-ci peuvent être formés par exemple d'une cellule motrice générant une vibration ultrasonore de type elliptique par combinaison d'une composante verticale et d'une composante transverse sur une pièce motrice. Plus précisément, une telle cellule de base peut être composée de deux céramiques piézo-électriques superposées sur un support et adaptées pour travailler respectivement en vibration transversale, c'est à dire au cisaillement, et en vibration longitudinale, c'est à dire en contraction/extension.

Lorsque ces deux céramiques sont excitées à la même fréquence, vers la résonance, mais avec un déphasage, de préférence de plus ou moins π/2, l'extrémité libre du moteur ainsi formée, opposée au support, décrit un mouvement elliptique. Ce mouvement elliptique peut être exploité pour déplacer une pièce reposant sur ce moteur piézo-électrique avec une force contrôlée.

En pratique, les moteurs piézo-électriques peuvent prendre diverses configurations, par exemple un simple barreau formé d'un empilement de deux céramiques piézo-électriques, ou encore une rondelle formée par juxtaposition d'un grand nombre de céramiques piézo-électriques.

Dans le cas d'une rondelle, celle-ci est excitée sous un mode de vibration à onde progressive et prend la forme d'une rondelle ondulée. La rotation se fait par roulement et frottement.

Un moteur piézo-électrique à onde mécanique progressive susceptible d'être utilisé dans le cadre de la présente invention est décrit par exemple dans le document JEE Janvier 1988, pages 42 à 44: "A New Concept In motors Ultrasonic Wave Oscillation Drive Energy".

Les moteurs magnétostrictifs sont directement équivalents aux moteurs piézo-électriques. Les moteurs magnétostrictifs comprennent des matériaux excités par un champ magnétique, tandis que les moteurs piézo-électriques comprennent des matériaux excités par un champ électrique.

On a déjà proposé d'utiliser ces moteurs piézo-électriques pour piloter des actionneurs. Ces moteurs piézo-électriques présentent en particulier l'intérêt de générer un couple important.

La présente invention a pour but de perfectionner les transducteurs électriques connus, notamment en réduisant leur consommation électrique.

Une telle réduction est particulièrement importante lorsqu'il s'agit d'utiliser de nombreux transducteurs, par exemple de nombreux moteurs piézo-électriques dans un même tableau de bord de véhicule automobile.

Ce but est atteint selon la présente invention grâce à un transducteur électrique comprenant un élément fixe, un élément mobile par rapport à l'élément fixe, et des moyens de contrôle à alimentation électrique aptes à contrôler le déplacement relatif entre l'élément fixe et l'élément mobile, caractérisé par le fait qu'il comprend des moyens de commande aptes à appliquer aux moyens de contrôle, un signal d'alimentation électrique dont la fréquence est proche de la fréquence de résonance du transducteur.

Les moyens de contrôle précités peuvent être adaptés soit pour générer une onde mécanique d'entrainement de l'élément mobile, auquel cas le transducteur constitue un moteur, soit pour être sensible au déplacement de l'élément mobile, auquel cas le transducteur constitue un capteur.

Par ailleurs les moteurs piézo-électriques connus présentent un grave inconvénient : ils ne présentent aucun repère de position, et même s'il n'existe pas de glissement entre la pièce entraînée et le moteur piézo-électrique, la vitesse étant proportionnelle à l'amplitude de la vibration, un recalage périodique de la pièce entraînée est indispensable.

Pour tenter de résoudre cette difficulté, on a déjà envisagé d'associer les moteurs piézo-électriques à un capteur de position formé par exemple d'une sonde à effet Hall et d'une cible ou encore d'un capteur potentiométrique ou d'un capteur optique. Ces solutions ne donnent cependant pas satisfaction. Elles sont coûteuses, encombrantes et peu fiables.

Le déposant a proposé dans le document FR-A-2685955, un actionneur comprenant un moteur à vibration ultrasonore de type elliptique et une pièce entraînée en contact avec le moteur dans lequel il est prévu en outre une cellule détectrice piézo-sensible en contact avec la pièce entraînée, apte à délivrer un signal représentatif des vibrations reçues et des moyens aptes à mesurer le décalage temporel entre le signal d'excitation appliqué au moteur et le signal délivré par la cellule détectrice résultant de la propagation dans la pièce entraînée, des vibrations engendrées par le moteur.

Un but auxiliaire de la présente invention est de proposer un nouveau système de capteur de position de transducteur à onde mécanique progressive, qui soit simple et qui permette de connaître avec précision la position relative de l'élément mobile du transducteur par rapport à l'élément fixe de celui-ci.

Ce but est atteint selon une variante de la présente invention grâce à un transducteur comprenant un élément fixe et un élément mobile par rapport à l'élément fixe, l'élément fixe étant adapté pour générer une onde mécanique progressive présentant une longueur d'onde au moins égale à l'amplitude de déplacement mécanique relatif autorisé entre l'élément fixe et l'élément mobile, l'élément mobile étant en contact avec l'élément fixe et comportant au moins un capteur localisé, sensible à l'onde progressive générée par l'élément fixe, et dans lequel il est prévu des moyens de mesure du déphasage entre un signal lié au signal d'excitation appliqué à l'élément fixe pour générer l'onde progressive et un signal détecté sur le capteur.

On peut bien entendu utiliser un seul capteur. Cependant l'exploitation des signaux issus de plusieurs capteurs permet d'améliorer la précision du résultat par fusion de données.

Dans ce contexte, selon un mode de réalisation particulier et non limitatif, l'élément fixe est adapté pour générer une onde mécanique progressive présentant une longueur d'onde unique.

Cependant selon d'autres variantes, l'élément fixe est adapté pour générer une onde mécanique progressive présentant plusieurs longueurs d'onde sur l'étendue de l'élément fixe, sous réserve que des moyens soient prévus pour limiter l'amplitude de déplacement mécanique relatif entre l'élément fixe et l'élément mobile à une amplitude au plus égale à une longueur d'onde.

D'autres variantes encore procédant par levée d'ambiguité seront décrites par la suite.

D'autres caractéristiques, buts et avantages de la présente invention apparaîtront à la lecture de la description détaillée qui va suivre, et en regard des dessins annexés donnés à titre d'exemples non limitatifs et sur lesquels:
- la figure 1 représente une vue schématique en coupe axiale d'un moteur piézo-électrique conforme à un premier mode de réalisation de la présente invention,
- la figure 2 représente le schéma fonctionnel du circuit de commande de ce moteur,
- la figure 3 représente une vue schématique en coupe axiale d'un moteur piézo-électrique conforme à une seconde variante de réalisation de la présente invention,
- la figure 4 représente le schéma du circuit de commande de ce moteur conforme à ce second mode de réalisation,
- la figure 5 représente schématiquement une vue partielle en coupe axiale d'un moteur conforme à la présente invention, et illustre plus précisément des moyens de sollicitation de l'élément mobile vers l'élément fixe,
- la figure 6 représente une vue axiale d'une variante de réalisation d'un moteur conforme à la présente invention,
- les figures 7 et 8 représentent deux vues similaires à la figure 6 illustrant des variantes de réalisation d'un rotor respectivement à branche unique et à deux branches,
- les figures 9, 10 et 11 représentent des vues en coupe transversale d'une branche du rotor selon un plan de coupe référencé IX-IX sur la figure 6, et illustrent diverses variantes d'appui de l'élément mobile sur l'élément fixe,
- la figure 12 représente une vue schématique d'une architecture de connexion de céramiques piézo-électriques dans le cadre de la présente invention et
- la figure 13 représente une variante de réalisation des moyens de commande conformes à la présente invention.

On va décrire par la suite des modes de réalisation préférentiels de la présente invention comprenant un moteur rotatif susceptible de déplacement relatif sur 360° entre l'élément fixe et l'élément mobile, et muni de moyens d'activation à fréquence ultrasonore, sans que ces dispositions puissent être considérées comme limitatives.

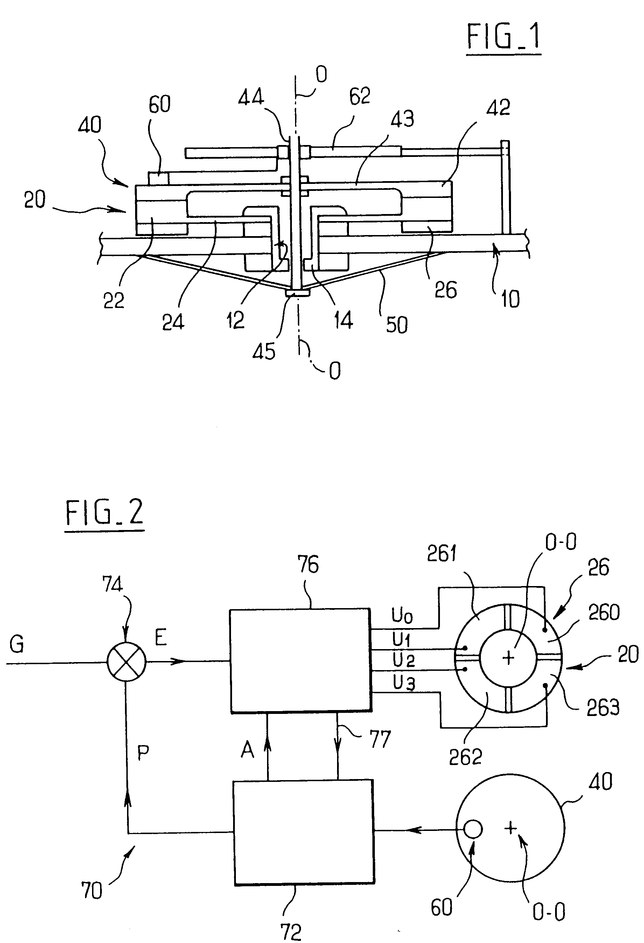

Le moteur piézo-électrique conforme à la présente invention repésenté sur la figure 1 annexée, comprend essentiellement un bâti 10, un élément fixe ou stator 20 lié au bâti 10 et un élément mobile ou rotor 40.

Le bâti 10 peut être formé par exemple d'un circuit imprimé plan. Le circuit imprimé 10 est muni d'un alésage traversant 12 dans lequel est placé un moyeu 14 centré sur un axe O-O.

Le stator 20 comprend principalement une bague 22 coaxiale à l'axe O-O et reliée au moyeu 14 par l'intermédiaire d'un flasque 24. En outre, une rondelle 26 également coaxiale à l'axe O-O, composée d'éléments moteurs, de préférence piézo-électriques, est intercalée entre la bague 22 et le circuit imprimé 10. Les éléments moteurs de la rondelle 26 sont alimentés à partir du circuit imprimé 10 par tout moyen approprié, par exemple par l'intermédiaire d'un système de connexion connu sous la dénomination ZEBRA formé d'un empilement régulier de couches en élastomère alternativement électriquement conducteur et non conducteur.

Le rotor 40 comprend une couronne ou une rondelle 42, coaxiale à l'axe O-O, qui repose sur la surface supérieure de la bague 22 de stator, soit la face du stator opposée à la rondelle 26.

Cette rondelle 42 de rotor est reliée rigidement à un arbre 44 centré sur l'axe O-O par l'intermédiaire d'un flasque 43. L'arbre 44 est concentrique aux éléments du stator 20 et du rotor 40 et guidé à rotation par le moyeu 14.

De préférence, un élément élastique 50 sollicite, sous un effort contrôlé, le rotor 40 vers le stator 20. Selon le mode de réalisation schématique et non limitatif donné sur la figure 1, cet élément élastique 50 est intercalé entre le circuit imprimé 10 formant le bâti du moteur et une tête évasée 45 liée à l'arbre 44.

La structure du moteur décrite précédemment en regard de la figure 1 est une structure classique assimilable à un moteur de type à onde mécanique progressive du genre décrit dans le document JEE précité. Lorsqu'elles sont alimentées de manière adéquate par le circuit imprimé 10, les cellules piézo-motrices de la rondelle 26 génèrent dans la bague 22 du stator une onde progressive ultrasonore qui entraîne un déplacement à rotation contrôlé résultant, du rotor 42.

Dans les moteurs classiques la structure de la rondelle motrice piézo-électrique 26 et l'architecture de commande correspondante sont adaptées pour générer plusieurs longueurs d'ondes de l'onde progressive ultrasonore dans la bague de stator 22, soit sur l'amplitude de déplacement relatif autorisé entre le stator 22 et le rotor 40. Selon l'invention le stator et l'architecture de commande associée peuvent être adaptés pour générer une onde mécanique progressive présentant une longueur d'onde au moins égale à l'amplitude de déplacement mécanique relatif autorisé entre l'élément fixe et l'élément mobile, soit par exemple une seule longueur d'onde de l'onde progressive ultrasonore dans le stator 20, lorsque celui-ci est susceptible de rotation sur 360°. Cependant d'autres variantes non limitées à ces dispositions seront décrites par la suite.

En outre, le rotor 40 reçoit de préférence un capteur 60, formé de préférence d'un élément piézo-électrique ou d'une pluralité d'éléments piézo-électriques pour améliorer la précision, sensible à l'onde progressive générée dans le stator 22 et se propageant dans le rotor 40 grâce aux zones de contact mécanique établies entre stator et rotor. Le capteur 60 est avantageusement placé sur le rotor 40 à la verticale de la bague 22 du stator.

On peut envisager par exemple de relier l'une des bornes du capteur 60 au rotor 40, lui-même relié électriquement à l'arbre 44, tandis que la seconde borne du capteur 60 est isolée et reliée à un circuit de traitement, par exemple par l'intermédiaire d'un ressort spiral, comme on l'a schématisé sur la figure 1 sous la référence 62. Ce ressort spiral assurant la connexion sur le capteur 60 peut lui-même être relié à une piste électriquement conductrice associée prévue sur le circuit imprimé 10 précité.

En outre, le moteur conforme à l'invention comprend des moyens de mesure du déphasage entre le signal détecté sur le capteur 60 et un signal lié au signal d'excitation appliqué aux cellules motrices 26 de l'élément fixe pour générer l'onde progressive.

Le signal lié au signal d'excitation peut être formé du signal d'excitation lui-même. Cependant, on décrira par la suite d'autres variantes dans lesquelles le signal lié au signal d'excitation et utilisé pour la mesure du déphasage est différent du signal d'excitation.

La surface supérieure du stator 20 est le siège d'une onde mécanique de type elliptique qui comprend une composante tangentielle et une composante normale. La composante tangentielle assure le déplacement du rotor 40. Le capteur 60 détecte principalement la propagation de la composante normale dans le rotor 60.

L'homme de l'art comprendra que le déphasage ainsi détecté est directement représentatif de l'orientation angulaire relative entre le rotor 40 et le stator 20.

Comme on l'a indiqué précédemment selon l'invention, les moyens de commande sont adaptés pour appliquer aux cellules motrices 26, un signal d'excitation dont la fréquence est proche de la fréquence de résonance du moteur.

Pour celà, par exemple, les moyens de commande peuvent être adaptés pour opérer un balayage en fréquence du signal d'excitation appliqué aux éléments moteurs 26, pour mesurer l'amplitude du signal détecté sur le capteur 60 et fixer la fréquence de commande des moyens moteurs 26 à la fréquence correspondant au moins sensiblement à l'amplitude maximum du signal détecté en sortie du capteur 60.

La fréquence de commande ainsi obtenue correspond en effet sensiblement à la fréquence de résonance du moteur, optimale pour obtenir un déplacement satisfaisant du rotor 40, et minimiser la consommation électrique du moteur.

En pratique, cette fréquence est de préférence dans le domaine ultrasonore, c'est-à-dire supérieure aux fréquences audibles. Elle est avantageusement de l'ordre de quelques dizaines de kHz, par exemple de l'ordre de 40kHz.

En pratique, on peut subdiviser la céramique piézo-motrice 26 en n secteurs d'excitation égaux, équi-répartis autour de l'axe 44, avec n supérieur ou égal à trois.

Sur chacun de ces secteurs on applique les tensions de la forme: Uₘ = U Cos (ωt + 2m π/n), m prenant toutes les valeurs de 0 à n-1.

Bien entendu la fonction précitée peut être approchée par toute tension périodique dont le fondamental est la période τ, avec τ = 2π/ω.

A titre d'exemple non limitatif, pour n = 4, les 4 secteurs de la céramique piézo-motrice 26 peuvent être ainsi excités à l'aide des signaux définis dans le tableau 1. Sur la figure 2, on retrouve les quatre secteurs sous la référence 260, 261, 262, 263. Ils reçoivent respectivement des tensions d'excitation U0, U1, U2, U3.

**TABLEAU 1**

| Temps | O | τ/4 | 2τ/4 | 3τ/4 | 4τ/4=0 |
|---|---|---|---|---|---|
| Secteur 1 | 1 | 0 | -1 | 0 | 1 |
| Secteur 2 | 0 | 1 | 0 | -1 | 0 |
| Secteur 3 | -1 | 0 | 1 | 0 | -1 |
| Secteur 4 | 0 | -1 | 0 | 1 | 0 |

Cette excitation crée une onde progressive d'une longueur d'onde unique sur le stator 20/26.

La céramique piézo-réceptrice 60 du rotor 40 reçoit un signal de période proche de la période τ et d'amplitude A, de phases ϕ par rapport au signal d'excitation appliqué à la céramique piézo-motrice 26.

La période reçue sur la céramique piézo-réceptrice 60 peut être très légèrement différente de la période du signal d'excitation en raison de la rotation du rotor 40 par rapport au stator 20.

Le circuit 70 de commande représenté sur la figure 2 comprend essentiellement un module 72 de mesure de l'amplitude A du signal issu du capteur 60 et de la phase ϕ de ce signal par rapport audit signal lié au signal d'excitation, un comparateur 74 et un module de commande 76. La mesure de phase peut être obtenue grâce à un filtre numérique pour éliminer le bruit des harmoniques, et augmenter la précision. La fréquence d'excitation étant connue, il est intéressant d'utiliser un filtre en peigne.

Le comparateur 74 compare la grandeur de consigne G appliquée sur l'une de ses entrées au déphasage ϕ mesuré par le module 72 entre le signal issu du capteur 60 et le signal lié au signal d'excitation. Le comparateur 74 génère sur sa sortie une valeur E représentative de l'écart entre la valeur consigne G et ce déphasage ϕ.

Enfin, le module de commande 76 qui applique au module de mesure 72 un signal représentatif de l'origine de la phase, sur sa sortie 77, reçoit par ailleurs le signal d'amplitude A délivré par le module de mesure 72 et la valeur d'écart E issue du comparateur 74.

L'amplitude A du signal issu du capteur 60 est proportionnelle à la tension d'excitation U. Cependant, cette amplitude A est d'autant plus grande que l'on se rapproche de la fréquence de résonance mécanique. Or, il est souhaitable de se rapprocher de cette résonance pour obtenir un déplacement optimum du moteur, et une consommation électrique minimale.

Pour cela, comme suggéré précédemment, le module de commande 76 opère un balayage de la fréquence d'excitation appliqué à la céramique 26, jusqu'à obtention de l'amplitude A maximum en sortie du capteur 60 et du module de mesure 72.

La fréquence obtenue peut être mémorisée, avec contrôle cyclique pour suivre une éventuelle dérive de la fréquence de résonance due à une variation d'un paramètre tel que température, charge, humidité, etc ...

Bien entendu ces moyens de recherche de la fréquence de résonance du transducteur pourront être remplacés par tous moyens équivalents.

Il peut s'agir par exemple de moyens exploitant la dérivée de la courbe de réponse en fréquence d'un capteur, placé sur le stator ou sur le rotor, pour déterminer le point de résonance.

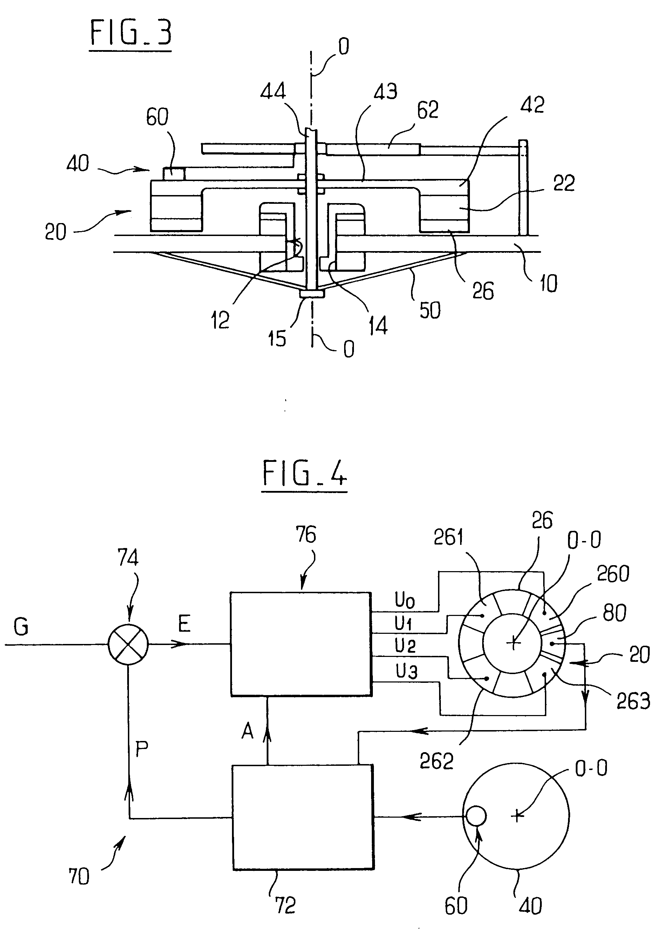

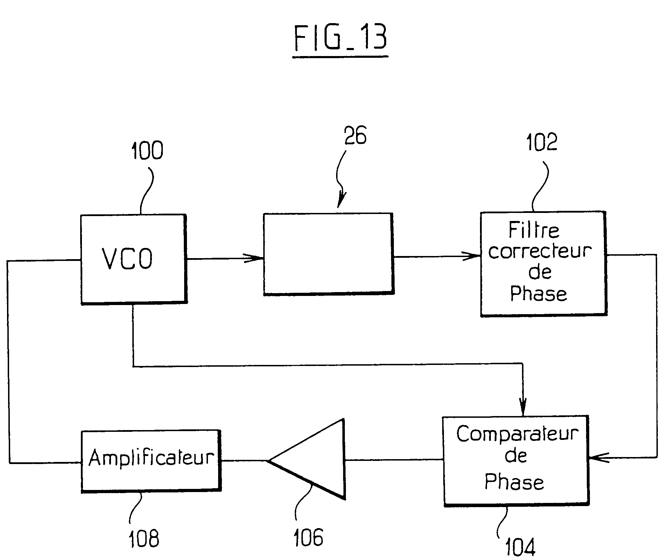

Selon une autre variante, les inventeurs ayant déterminé que le signal issu d'une cellule piézo-électrique détectrice placée sur le stator, telle que la cellule référencée 80 sur la figure 4, présente une chute brusque de la phase aux alentours de la fréquence de résonance, typiquement d'une valeur équivalente à π/2, les moyens de commande peuvent prendre la structure représentée sur la figure 13.

On aperçoit sur cette figure 13 un circuit comprenant:
- un VCO 100 qui attaque les cellules piézo 26 du stator, par exemple avec des signaux en sinus et cosinus,
- un filtre 102 qui reçoit le signal généré par une cellule (80 par exemple) placée sur le stator, et applique une correction de phase, à ce signal,
- un comparateur de phase 104 qui compare le signal issu du filtre 102, et un signal de référence, par exemple le signal de sortie du VCO 100, et
- un intégrateur 106 qui assure la stabilité de la boucle et attaque le VCO 100 (le cas échéant par l'intermédiaire d'un amplificateur 108).

Un tel circuit permet de trouver la valeur exacte de la fréquence de résonance. On peut par la suite faire fonctionner le moteur à cette fréquence ou à une fréquence voisine en agissant sur le VCO 100.

En outre, la phase ϕ générée en sortie du module de mesure 72 est directement représentative de la position du rotor 40 par rapport au stator 20, sur un tour complet, sans ambiguité du fait que le stator ne génère qu'une longueur d'onde, pour l'onde progressive.

Avec une onde progressive ultrasonore générée dans le stator 20, présentant trois longueurs d'onde, il y a ambiguité à un tiers ou deux tiers de tour près sur la position du rotor. Il faut donc prévoir des moyens de levée d'ambiguïté.

La phase ϕ permet donc de repérer avec précision la position du rotor 40.

Pour faire tourner le rotor 40 en sens contraire, il suffit de permuter la séquence temporelle d'excitation sur les n secteurs, par rapport au tableau 1, en utilisant par conséquent la séquence donnée dans le tableau 2.

**TABLEAU 2**

| Temps | 0 | τ/4 | 2τ/4 | 3τ/4 | 4τ/4 |
|---|---|---|---|---|---|
| Secteur 1 | 1 | 0 | -1 | 0 | 1 |
| Secteur 2 | 0 | -1 | 0 | 1 | 0 |
| Secteur 3 | -1 | 0 | 1 | 0 | -1 |
| Secteur 4 | 0 | 1 | 0 | -1 | 0 |

Plus précisément, l'alimentation de la cellule piézo-électrique 26 peut faire l'objet de diverses modalités.

Selon un premier exemple, la cellule motrice 26 peut être alimentée selon les modalités suivantes:
i) si l'écart E du déphasage en sortie du comparateur 74 diminue, le module de commande 76 diminue l'amplitude des tensions d'alimentation U0, U1, U2, Un appliquées aux n secteurs,
ii) lorsque l'écart E est nul, on diminue très fortement l'amplitude U0, U1, U2, Un de ces tensions de manière à arrêter le rotor 40, tout en gardant un minimum de tension d'excitation permettant de mesurer la phase,
iii) lorsque l'écart E change de sens, on prend la deuxième séquence d'excitation (tableau 2) et on augmente l'amplitude pour que le rotor tourne,
iv) puis l'on reboucle le processus sur l'étape i.

Selon un second exemple, la céramique piézo-électrique 26 est alimentée selon les modalités suivantes:
i) Quand l'écart de phase E généré par le comparateur 74 est nul, on supprime les tensions d'alimentation U0, U1, U2, Un. Il n'y a alors plus de mesure de phase.
ii) On stocke dans une mémoire la valeur de phase ϕ obtenue et
iii) Cette valeur ϕ mémorisée est comparée en permanence à la valeur de consigne G appliquée en entrée du système de commande.
iv) Le déplacement du moteur est initié à nouveau par application des signaux d'excitation U0, U1, U2, Un si un écart est détecté entre la valeur de consigne d'entrée G, et la valeur de phase mémorisée φ.

Selon le mode de réalisation représenté sur la figure 1, la bague 22 du stator 20 est reliée au moyeu 14 par l'intermédiaire du flasque 24. L'invention n'est cependant pas limitée à ce mode de réalisation particulier.

Par exemple, on peut prévoir de coller les n secteurs de la rondelle piézo-électrique motrice 26 sur des pistes électriquement conductrices respectives du circuit imprimé 10, à l'aide d'une colle souple et conductrice, la rondelle motrice 26 étant collée de l'autre côté, par exemple par une colle dure, sur la bague 22 du stator 20 dépourvue du flasque 24, comme illustré sur la figure 3.

Selon les modes de réalisation décrits précédemment, le signal lié au signal d'excitation, utilisé comme référence de phase pour le module 72 était formé du signal de tension d'excitation lui-même appliqué sur les n secteurs de la rondelle motrice 26.

Selon d'autres variantes, on peut prendre comme origine de phase, la phase du courant d'excitation et non pas la tension, ou une phase obtenue par traitement du courant et de la tension d'excitation, ou encore ménager dans la rondelle motrice 26 du stator un capteur, référencé 80 sur la figure 4 générant en sortie un signal représentatif de la vibration réelle du stator. Le signal issu du capteur 80 peut être utilisé, d'une part pour la mesure de l'amplitude de vibration pilotant le balayage en fréquence comme indiqué précédemment pour approcher la résonance du système, et d'autre part comme référence de phase par rapport au capteur 60 du rotor. Le signal issu du capteur 80 peut également être utilisé pour mesurer la phase de vibration afin de piloter un asservissement de fréquence.

Dans ce cas, les n secteurs piézo-électriques moteurs sont de préférence équi-répartis autour de l'axe du moteur et séparés par des intervalles équi-répartis correspondant chacun au capteur 80 précité comme illustré sur la figure 3.

L'utilisation d'un tel capteur 80 sur le stator permet notamment de s'affranchir de la pente de déphasage très sensible existant entre la phase du signal d'entrée et la vibration mécanique résultante du stator, au voisinage de la résonance.

Le schéma fonctionnel des moyens de commande résultant est illustré sur la figure 4.

On retrouve sur celle-ci les n secteurs 260, 261, 262, 263 (quatre en l'espèce) correspondant aux cellules piézo-électriques motrices de la rondelle 26 ainsi que les tensions de commande U0 à Un appliquées sur ces secteurs en sortie du module de commande 76.

On retrouve par ailleurs sur la figure 4 le module de mesure 72 qui reçoit une référence de phase en sortie du capteur 80 et le signal issu du capteur 60. Le module de mesure 72 applique un signal représentatif de l'amplitude A au module de commande 76 pour piloter le balayage en fréquence afin d'obtenir la résonance. En outre, le module de mesure 72 applique un signal de phase φ sur le comparateur 74 qui reçoit en outre la valeur de consigne G d'entrée et génère à sa sortie l'écart E appliqué au module de commande 76.

On a indiqué précédemment que le rotor 40 était de préférence appliqué sur le stator 20 grâce à des moyens élastiques, sous un effort contrôlé.

Selon une autre variante, l'effort sous lequel le rotor 40 repose sur le stator 20 peut être contrôlé par des moyens magnétiques.

Cette disposition permet d'éviter tout effort parasite dû au ressort.

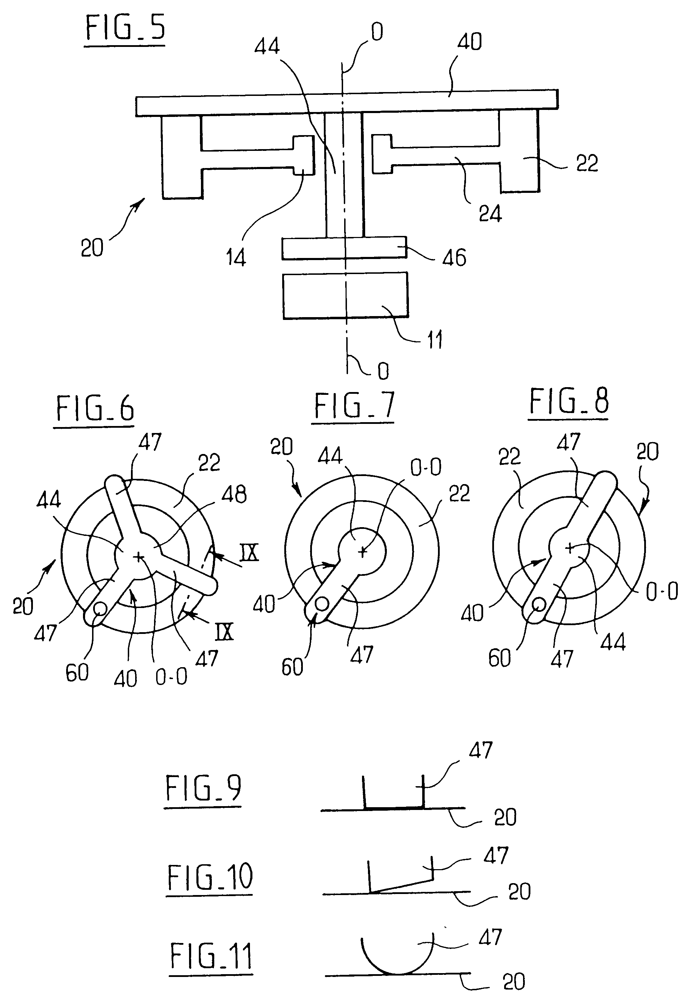

Comme on l'a schématisé sur la figure 5, on peut par exemple placer pour celà une palette magnétique 46 sur le rotor 40, en regard, par exemple axialement, d'un aimant 11 lié au stator 20 ou au bâti 10.

Le cas échéant, on peut réaliser l'intégralité du rotor 40 en matériau magnétique.

On peut par exemple former une partie au moins du stator 20 en un aimant ou une ferrite magnétique dure, une partie au moins du rotor placée en regard étant formée à base d'une ferrite magnétique douce, ou inversement. Selon encore une autre variante, une partie au moins du stator peut être formée en une ferrite magnétique dure à aimantation axiale, en regard d'une partie au moins du rotor similaire.

Bien entendu, le cas échéant, des rondelles de glissement peuvent être intercalées entre rotor et stator.

Comme on l'a schématisé sur la figure 6, le rotor 40 peut être formé non point d'une bague continue plane, mais d'une structure à appui ponctuel sur la bague 22 du stator.

Selon le mode de réalisation particulier non limitatif représenté sur la figure 6, on a ainsi illustré un rotor en forme d'étoile à trois branches 47 reliées en leur centre par un moyeu 48 lié à l'arbre 44 et dont les extrémités reposent sur la bague 22 du stator. Les branches 47 sont avantageusement équi-réparties autour de l'axe 44. L'une de ces branches 47 porte le capteur 60, par exemple à la verticale du stator 22. Lorsque plusieurs capteurs 60 sont prévus, ceux-ci sont disposés de préférence sur des branches différentes.

Bien entendu le nombre de branches 47 du rotor 40 peut faire l'objet de nombreuses variantes. Le rotor 40 peut ainsi comprendre une branche unique, ou encore deux branches diamétralement opposées, comme on l'a schématisé sur les figures 7 et 8.

Par rapport, à une couronne plane continue, l'utilisation de points d'appui ponctuels sur le stator permet de s'affranchir de perturbations pouvant résulter de contacts évolutifs (qui se déplacent) sous l'effet de déformation du rotor et/ou du stator.

En pratique, le point de contact des branches 47 sur le stator 22 peut faire l'objet de nombreuses variantes. Ce contact peut être établi par exemple par l'intermédiaire d'un doigt présentant une surface plane parallèle à la surface supérieure du stator 22 comme illustré sur la figure 9, par l'intermédiaire d'un doigt taillé en biseau incliné par-rapport à la surface supérieure du stator 22 comme illustré sur la figure 10, ou encore par l'intermédiaire d'un doigt à extrémité arrondie comme illustré sur la figure 11.

L'exploitation de céramiques piézo-électriques polarisées peut permettre de simplifier l'architecture de connexion de celles-ci.

On sait en effet que deux céramiques piézo-électriques de polarisations opposées à la fabrication, subiront des déformations opposées sous un même signal d'excitation.

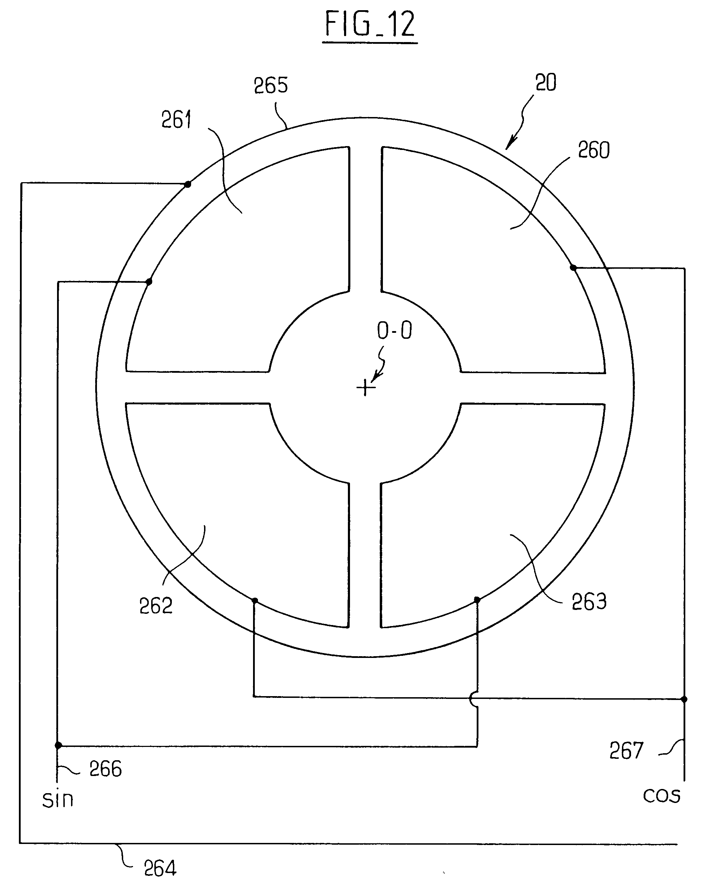

Par exemple, comme on l'a illustré sur la figure 12, dans le cas de quatre céramiques 260, 261, 262 et 263 équi-réparties autour de l'axe de rotation, on peut disposer les céramiques sous forme d'une première paire de céramiques 260, 263 adjacentes de polarisation positive, et une seconde paire de céramiques 261, 262 respectivement adjacentes de polarisation opposée négative.

Deux secteurs diamétralement opposés, l'un 263 appartenant à la première paire, l'autre 261 appartenant à la seconde paire, sont alimentés par un signal sinusoïdal entre une borne de masse 264 reliée à une électrode de masse 265 et une borne d'alimentation 266 commune aux deux céramiques 261, 263. Bien qu'alimentées par le même signal, ces deux céramiques 261, 263 ayant des polarisations opposées auront des réactions opposées.

De façon symétrique, les deux autres céramiques diamétralement opposées 260 et 262 peuvent êre alimentées par un signal en cosinus entre une borne d'alimentation commune 267 et la borne de masse 264. Là encore, les deux céramiques 260, 262, bien qu'alimentées par un même signal, auront des comportements opposés en raison de leur polarisation opposée.

Bien entendu la présente invention n'est pas limitée aux modes de réalisation particuliers qui viennent d'être décrits mais s'étend à toute variante conforme à son esprit.

En particulier, l'invention n'est pas limitée à l'utilisation d'un moteur rotatif. Elle peut s'étendre à l'utilisation d'un moteur rectiligne.

Comme on l'a indiqué précédemment, l'invention s'applique à tout type de transducteur à onde progressive ultrasonore, en particulier aux transducteurs comprenant des cellules piézo-électriques ou des cellules magnéto-strictives.

La présente invention trouve notamment application dans la réalisation de moteurs, par exemple pour l'entraînement d'aiguilles d'indicateurs en regard de cadrans pour la visualisation d'informations sur tableaux de bord de véhicules automobiles. Cependant, elle n'est pas limitée à cette application particulière.

Comme on l'a indiqué précédemment, l'invention n'est pas limitée à la réalisation d'actionneur ou moteur, mais peut également trouver application dans la conception de capteurs. Dans ce cas, l'élément mobile est forcé à déplacement par un organe d'actionnement externe. Et la position de cet élément mobile par rapport à l'élément fixe, est déterminée par mesure du déphasage entre le signal issu du capteur 60 lié à l'élément mobile et le signal lié au signal d'excitation. Ce signal d'excitation peut être adapté pour générer une onde mécanique progressive, comme indiqué précédemment. Cependant dans le cas d'un capteur, la cellule piézoélectrique 26 placée sur le stator peut recevoir simplement des impulsions contrôlées. Dans ce cas la cellule piézoélectrique 26 peut être formée sur un secteur unique limité du stator.

Ce signal d'excitation peut être un signal périodique carré, sinusoïdal ou de toute autre forme, proche de la fréquence de résonance.

Selon d'autres variantes, come indiqué précédemment, l'élément fixe 20 peut être adapté pour générer une onde mécanique progressive présentant plusieurs longueurs ondes, sous réserve que des moyens soient prévus pour limiter l'amplitude de déplacement mécanique relatif entre l'élément fixe 20 et l'élément mobile 40 à une amplitude inférieure à une longueur d'onde, ou encore qu'il soit prévu des moyens de levée d'ambiguité afin de préciser la position de l'élément mobile.

Lorsqu'une évolution de la fréquence d'excitation est prévue, il est intéressant d'utiliser un filtre à capacités commutées dans la détection des signaux afin de se placer toujours dans la même position par rapport à la pente du filtre, quelle que soit la fréquence d'excitation.

De préférence la longueur d'onde de l'onde mécanique progressive est égale à un sous-multiple de la longueur de l'élément fixe 20.

Par exemple pour un moteur rotatif, l'élément fixe 20 peut être adapté pour générer deux longueurs d'onde sur sa circonférence, si des moyens sont prévus pour limiter le déplacement du rotor 40 sur 180° ou lever l'ambiguité entre les deux secteurs concernés de 180°; ou encore pour générer trois longueurs d'onde sur sa circonférence, si des moyens sont prévus pour limiter le déplacement du rotor 40 sur 120° ou lever l'ambiguité entre les trois secteurs concernés de 120°.

Les moyens conçus pour limiter le déplacement mécanique relatif entre l'élément fixe 20 et l'élément mobile 40 peuvent être formés de plusieurs variantes. Ils peuvent par exemple être formés de butées mécaniques ou encore être constitués par les moyens de commande eux-mêmes qui sont adaptés pour appliquer sur le moteur des signaux aptes à limiter le déplacement mécanique.

Les moyens de levée d'ambiguité peuvent prendre différentes formes.

Il peut s'agir par exemple:
- de moyens de comptage des maximum de signal détecté et donc du passage d'une longueur d'onde à une autre, soit du secteur concerné;
- de capteurs auxiliaires permettant de déterminer le secteur concerné, ou encore
- d'un algorithme type logique floue et fusion de données.

Un tel algorithme peut travailler comme suit.

Connaissant la position de départ, le sens de déplacement, l'ordre de grandeur de la vitesse, et maitrisant la fréquence des mesures (qui se font en continu le cas échéant), on peut interdire toute ambiguïté. Entre deux mesures successives le déplacement réel ne peut en aucun cas dépasser un angle minimum αₘᵢₙ (par exemple 2°), si la position précédente est α₁ et que la mesure directe de la nouvelle position nous donne n valeurs possibles α₂₁, α₂₂ ... α₂ₙ (si on a n longueurs d'ondes sur le stator), il suffit de choisir l'angle α₂ᵢ qui est compris entre α₁ - αₘᵢₙ et α₁ + αₘᵢₙ. Cette opération n'est possible que si αₘᵢₙ < 2π/n ce qui est généralement vérifié (αₘᵢₙ est de l'ordre du degré et n est de l'ordre de 5 pour les moteurs usuels).

En outre la présente invention n'est pas limitée à l'utilisation d'une onde mécanique ultrasonore, mais peut s'étendre à l'utilisation d'ondes mécaniques situées dans une plage de fréquence différente.

Le capteur 60 placé sur le rotor peut être relié à des pistes métallisées électriquement conductrices prévues sur le circuit imprimé 10 par tous moyens équivalents à ceux précédemment décrits, par exemple par l'intermédiaire de contacts frottants.

Les diverses céramiques, telles que 260, 261, 262, 263 peuvent être réalisées sous forme de céramiques distinctes ou encore sous forme d'une céramique unique pourvue de plages d'alimentation distinctes, ou encore de toute combinaison intermédiaire entre ces deux variantes.

## Revendications

1. Transducteur électrique comprenant un élément fixe (20), un élément (40) mobile par rapport à l'élément fixe (20), et des moyens de contrôle (26; 80) à alimentation électrique aptes à contrôler le déplacement relatif entre l'élément fixe (20) et l'élément mobile (40), caractérisé par le fait qu'il comprend des moyens de commande (76) aptes à appliquer aux moyens de contrôle (26), un signal d'alimentation électrique dont la fréquence est proche de la fréquence de résonance du transducteur.

2. Transducteur selon la revendication 1, caractérisé par le fait que les moyens de contrôle (26) sont adaptés pour générer une onde mécanique d'entrainement de l'élément mobile (40), de sorte que le transducteur constitue un moteur.

3. Transducteur selon la revendication 1, caractérisé par le fait que les moyens de contrôle (26, 80), sont sensibles au déplacement de l'élément mobile (40), de sorte que le transducteur constitue un capteur.

4. Transducteur selon l'une des revendications 1 à 3, caractérisé par le fait qu'il comprend des moyens (72, 76) aptes à mesurer l'amplitude de vibrations mécaniques du système et des moyens aptes à opérer un balayage en fréquence du signal de commande appliqué à l'élément fixe (20) jusqu'à obtention par convergence d'une amplitude de vibrations mécaniques maximale.

5. Transducteur selon la revendication 4, caractérisé par le fait que l'amplitude des vibrations mécaniques est mesurée par mesure de l'amplitude d'un signal issu d'un capteur (60) placé sur l'élément mobile (40).

6. Transducteur selon la revendication 4, caractérisé par le fait que l'amplitude des vibrations mécaniques de l'élément mobile est mesurée par mesure de l'amplitude d'un signal issu d'un capteur (80) prévu sur l'élément fixe (20).

7. Transducteur selon l'une des revendications 1 à 3, caractérisé par le fait que les moyens de commande (76) exploitent la dérivée de la courbe de réponse en fréquence d'un capteur placé sur l'élément fixe (20) ou l'élement mobile (40), pour déterminer le point de résonance.

8. Transducteur selon l'une des revendications 1 à 3, caractérisé par le fait que les moyens de commande comprennent un circuit comportant:
- un VCO (100) qui attaque au moins une cellule piézo (26) placée sur l'élément fixe (20),
- un filtre (102) qui reçoit le signal généré par une cellule (80) placée sur l'élément fixe (20), et applique une correction de phase, à ce signal,
- un comparateur de phase (104) qui compare le signal issu du filtre (102), et un signal de référence, par exemple le signal de sortie du VCO (100), et
- un intégrateur (106) qui assure la stabilité de la boucle et attaque le VCO (100), le cas échéant par l'intermédiaire d'un amplificateur (108).

9. Transducteur à onde mécanique progressive selon l'une des revendications 1 à 8, caractérisé par le fait qu'il comprend un élément fixe (20) et un élément (40) mobile par rapport à l'élément fixe (20), l'élément fixe (20) étant adapté pour générer une onde mécanique progressive présentant une longueur d'onde au moins égale à l'amplitude de déplacement mécanique relatif autorisé entre l'élément fixe (20) et l'élément mobile (40), l'élément mobile (40) étant en contact avec l'élément fixe (20) et comportant au moins un capteur (60) localisé, sensible à l'onde progressive générée par l'élément fixe (20), et dans lequel il est prévu des moyens (72) de mesure du déphasage entre un signal lié au signal d'excitation appliqué à l'élément fixe (20) pour générer l'onde progressive et un signal détecté sur le capteur (60).

10. Transducteur selon la revendication 9, caractérisé par le fait que l'élément fixe (20) est adapté pour générer, sur sa longueur, une onde mécanique progressive présentant une longueur d'onde unique.

11. Transducteur selon la revendication 9, caractérisé par le fait que l'élément fixe (20) est adapté pour générer une onde mécanique progressive présentant plusieurs longueurs ondes, sous réserve que des moyens soient prévus pour limiter l'amplitude de déplacement mécanique relatif entre l'élément fixe (20) et l'élément mobile (40) à une amplitude au plus égale à une longueur d'onde.

12. Transducteur selon la revendication 11, caractérisé par le fait que la longueur d'onde de l'onde mécanique progressive est égale à un sous-multiple de la longueur de l'élément fixe (20).

13. Transducteur selon l'une des revendications 11 ou 12, caractérisé par le fait que les moyens limitant l'amplitude de déplacement mécanique relatif entre l'élément fixe (20) et l'élément mobile (40) sont formés de butées mécaniques.

14. Transducteur selon l'une des revendications 11 ou 12, caractérisé par le fait les moyens limitant l'amplitude de déplacement mécanique relatif entre l'élément fixe (20) et l'élément mobile (40) sont constitués par les moyens de commande eux-mêmes qui sont adaptés pour appliquer sur le moteur des signaux aptes à limiter le déplacement mécanique.

15. Transducteur selon l'une des revendications 1 à 9, caractérisé par le fait que l'élément fixe (20) est adapté pour générer une onde mécanique progressive présentant plusieurs longueurs d'ondes, au moins un capteur (60) sensible à cette onde progressive étant placé sur l'élément mobile (40) et par le fait qu'il est prévu des moyens de mesure du déphasage entre un signal lié au signal d'excitation appliqué à l'élément fixe pour générer l'onde progressive et un signal détecté sur le capteur (60) et des moyens pour lever l'ambiguité de position résultant de cette mesure.

16. Transducteur selon la revendication 15, caractérisé par le fait que les moyens de levée d'ambiguité comprennent des moyens de comptage des maximum du signal détecté.

17. Transducteur selon la revendication 15, caractérisé par le fait que les moyens de levée d'ambiguité comprennent des capteurs auxiliaires permettant de déterminer le secteur dans lequel est situé l'élément mobile (40).

18. Transducteur selon la revendication 15, caractérisé par le fait que les moyens de levée d'ambiguité comprennent des moyens aptes à mettre en oeuvre un algorithme de type logique floue et fusion de données.

19. Transducteur selon l'une des revendications 9 à 18, caractérisé par le fait que ledit signal lié au signal d'excitation est formé de la tension du signal d'excitation appliqué à l'élément fixe (20) pour générer l'onde progressive.

20. Transducteur selon l'une des revendications 9 à 18, caractérisé par le fait que ledit signal lié au signal d'excitation est formé d'un signal issu d'un capteur (80) placé sur la partie fixe (20).

21. Transducteur selon l'une des revendications 9 à 18, caractérisé par le fait que ledit signal lié au signal d'excitation est formé par le courant appliqué à l'élément fixe pour générer l'onde progressive, ou une combinaison du courant et de la tension appliquée à cet élément fixe (20).

22. Transducteur selon l'une des revendications 1 à 21, caractérisé par le fait que l'élément fixe (20) comprend n secteurs (260, 263) comprenant chacun une cellule motrice, avec n supérieur ou égal à trois, recevant chacun une tension de la forme: Uₘ = U Cos (ωt + 2m π/n).

23. Transducteur selon l'une des revendications 1 à 22, caractérisé par le fait qu'il comprend des moyens aptes à permuter la séquence temporelle du signal d'excitation appliquée à l'élément fixe, pour inverser le sens de déplacement de celui-ci.

24. Transducteur selon l'une des revendications 1 à 23, caractérisé par le fait qu'il comprend des moyens de commande composés d'un module (72) apte à mesurer l'amplitude d'un signal issu d'un capteur de vibrations (60, 80) ainsi que le déphasage du signal issu d'un capteur (60) par rapport au signal lié au signal d'excitation, un comparateur (74) apte à comparer le déphasage ainsi mesuré (P) à une valeur de consigne appliquée en entrée (G), et un module de commande (76) adapté, d'une part pour opérer un balayage en fréquence du signal d'excitation jusqu'à obtention par convergence d'une amplitude maximale du signal issu du capteur de vibrations, et d'autre part à moduler l'amplitude du signal d'excitation appliqué à l'élément fixe (20) en fonction de l'écart de phase détectée en sortie du comparateur (74).

25. Transducteur selon l'une des revendications 1 à 24, caractérisé par le fait que l'élément mobile (40) est en contact ponctuel sur l'élément fixe (20).

26. Transducteur selon la revendication 25, caractérisé par le fait que l'élément mobile (40) a la forme générale d'une étoile comprenant un nombre de branches (47) supérieur ou égal à 1.

27. Transducteur selon la revendication 26, caractérisé par le fait qu'un capteur (60) est prévu sur au moins une extrémité de l'une des branches (47) de l'étoile.

28. Transducteur selon l'une des revendications 1 à 27, caractérisé par le fait qu'il comprend des moyens magnétiques (11, 46) assurant une sollicitation de l'élément mobile (40) vers l'élément fixe (20).

29. Transducteur selon l'une des revendications 1 à 28, caractérisé par le fait qu'il comprend des cellules piézo-électriques (260, 261, 262, 263) présentant des polarités opposées.

30. Transducteur selon l'une des revendications 1 à 29, caractérisé par le fait qu'il comprend une première paire de cellules adjacentes (260, 263) de même polarité, une seconde paire respectivement adjacente de cellules (261, 262) de polarité identique entre elles et opposée à la première paire, deux cellules diamétralement opposées (261, 263) appartenant respectivement à chaque paire précitée et étant alimentées entre une borne de masse (264) et une borne d'alimentation commune (266) tandis que les deux autres cellules diamétralement opposées sont alimentées entre la borne de masse (264) et une seconde borne d'alimentation commune (267).

31. Transducteur selon la revendication 30, caractérisé par le fait que les deux cellules diamétralement opposées (261, 263) premières citées sont alimentées par un signal en quadrature de phase par rapport aux deux autres cellules diamétralement opposées (260, 262).

32. Transducteur selon l'une des revendications 1 à 31, caractérisé par le fait qu'il comprend des moyens de commande aptes à appliquer la séquence suivante:
i) diminution de l'amplitude du signal d'excitation appliquée à l'élément fixe (20) lorsque l'écart (E) de phase entre ledit signal lié au signal d'excitation et le signal détecté sur le capteur (60), diminue,
ii) très forte diminution de l'amplitude de ce signal d'excitation lorsque l'écart (E) de phase devient nul, tout en gardant un minimum de signal d'excitation pour permettre de mesurer la phase,
iii) permutation de la séquence du signal d'excitation lorsque l'écart de phase détecté change de sens et augmentation simultanée de l'amplitude du signal d'excitation,
iv) réitération du processus à partir de l'étape i).

33. Transducteur selon l'une des revendications 1 à 31, caractérisé par le fait qu'il comprend des moyens de commande aptes à interrompre le signal d'excitation appliqué à l'élément fixe (20) lorsque l'écart (E) de phase entre ledit signal lié au signal d'excitation et le signal détecté sur le capteur (60), devient nul, des moyens de mémorisation aptes à mémoriser la valeur de la phase (φ) détectée lors de l'arrêt du signal d'excitation, des moyens de comparaison aptes à comparer la valeur de phase (φ) mémorisée à la valeur de consigne d'entrée (G) pour ré-initier le signal d'excitation appliqué à l'élément fixe (20) lorsque la phase (φ) mémorisée diffère de la phase de consigne (G) appliquée en entrée.

34. Transducteur selon l'une des revendications 1 à 33, caractérisé par le fait qu'il comprend un bâti (10) qui porte un stator (20) comprenant une bague (22) reliée à un moyeu par l'intermédiaire d'un flasque (24), une rondelle (26) d'élément moteur intercalée entre le bâti et cette rondelle et un élément mobile formé d'un rotor (42) comportant une rondelle (42) qui repose contre la bague (22) de l'élément fixe et qui est reliée par l'intermédiaire d'un flasque (43) à un arbre (44) guidé à rotation.

35. Transducteur selon l'une des revendications 1 à 34, caractérisé par le fait qu'il comprend un élément fixe constitué d'une bague (22) superposée à une rondelle d'éléments moteurs (26) lesquels sont collés d'une part sur un bâti (10) par l'intermédiaire d'une colle, avantageusement électriquement conductrice et collés, d'autre part sur la bague de l'élément fixe (22).

36. Transducteur selon l'une des revendications 1 à 35, caractérisé par le fait que le capteur (60) est relié à au moins un spiral (62) électriquement conducteur.

37. Transducteur selon l'une des revendications 1 à 36, caractérisé par le fait qu'il constitue un actionneur ou moteur.

38. Transducteur selon l'une des revendications 1 à 37, caractérisé par le fait qu'il constitue un capteur.

39. Transducteur selon l'une des revendications 1 à 38, caractérisé par le fait que l'élément fixe (20) comprend des cellules piézo-électriques.

40. Transducteur selon l'une des revendications 1 à 39, caractérisé par le fait que l'élément fixe (20) comprend des cellules magnétostrictives excitées par des moyens générateurs de champ magnétique.

41. Transducteur selon l'une des revendications 1 à 40, caractérisé par le fait que l'élément mobile (40) est guidé à rotation ou à translation rectiligne.

42. Transducteur selon la revendication 30, caractérisé par le fait que des cellules (260, 261, 262, 263) de polarités opposées, diamétralement opposées, sont alimentées par un même signal d'excitation.
